Europäisches Patentamt

European Patent Office

Office européen des brevets

(19)

(11) Numéro de publication : **0 398 801 B1**

(12) **FASCICULE DE BREVET EUROPEEN**

(45) Date de publication du fascicule du brevet :
**21.09.94 Bulletin 94/38**

(21) Numéro de dépôt : **90401299.4**

(22) Date de dépôt : **16.05.90**

(51) Int. Cl.⁵ : **H04N 5/33,** H04N 3/15,
H04N 3/09

(54) Ensemble de détection pour système de veille infrarouge.

(30) Priorité : **18.05.89 FR 8906482**

(43) Date de publication de la demande :
**22.11.90 Bulletin 90/47**

(45) Mention de la délivrance du brevet :
**21.09.94 Bulletin 94/38**

(84) Etats contractants désignés :
**DE GB IT**

(56) Documents cités :
**EP-A- 0 023 131**
**EP-A- 0 224 228**
**EP-A- 0 230 809**
**GB-A- 2 191 059**

(73) Titulaire : **SAT (SOCIETE ANONYME DE TELECOMMUNICATIONS) Société Anonyme française**
**41, rue Cantagrel**
**F-75631 Paris Cédex 13 (FR)**

(72) Inventeur : **Delteil, Alain**
**18, rue des Cordelières**
**75013Paris (FR)**
Inventeur : **Barret, Jacques**
**5,rue du Beau Site**
**91400 - Orsay (FR)**

(74) Mandataire : **Bloch, Gérard et al**
**2, square de l'Avenue du Bois**
**F-75116 Paris (FR)**

EP 0 398 801 B1

## Description

La présente invention concerne un ensemble de détection pour système de veille infrarouge, panoramique ou sectorielle.

Un tel ensemble de détection peut comprendre un dispositif optique, dans le plan focal de celui-ci, une barrette de détecteurs - des photodiodes infrarouge - d'analyse de paysages, ou de fonds de scène, hybridée à une plaquette de prétraitement contenant des circuits à transfert de charges, à savoir, et essentiellement, des circuits d'entrée associés aux photodiodes, pour intégrer leurs courants de sortie, des circuits de pré-amplification, de filtrage et de multiplexage et un circuit de sortie formant interface entre la plaquette de prétraitement et une plaquette distincte de traitement subséquent. Un ensemble de détection est décrit, par exemple, dans GB-A-2 191 059.

Lorsque la barrette d'analyse comporte des photodiodes disposées suivant une pluralité de lignes de plusieurs photodiodes, le courant de sortie de chaque photodiode peut donc être traité dans un circuit d'intégration délivrant un signal de charges à une ligne à retard dans laquelle il subit un déphasage déterminé, les signaux de charges délivrés par toutes les lignes à retard associées aux photodiodes d'une même ligne étant additionnés dans un sommateur. Le circuit en question est un circuit retard-sommation dit TDI (time delay integration).

La plaquette de prétraitement peut également comporter des circuits d'ébasage, d'évacuation et d'anti-êblouissement, cette dernière fonction visant à dériver tout le courant de diode quand il est trop important et à éviter qu'un courant saturant n'altère le fonctionnement des circuits de la plaquette de traitement.

Les ensembles de détection infrarouge sont aujourd'hui utilisés soit, donc, dans les systèmes de veille, soit dans les systèmes d'imagerie, soit dans les systèmes combinés.

Dans les systèmes d'imagerie, pour l'analyse de paysages en temps réel, les détecteurs élémentaires de la barrette d'analyse doivent être les plus petits possibles pour obtenir la meilleure résolution angulaire possible et optimaliser ainsi les performances de portée de reconnaissance et d'identification.

Les barrettes des systèmes d'imagerie peuvent être de plusieurs types, comme par exemple et au moins, les quatre qui suivent.

1) Barrette comprenant une série de détecteurs élémentaires alignés en colonne et légèrement décalés les uns par rapport aux autres. Une telle disposition implique un entrelacement des trames de balayage, c'est-à-dire un décalage d'une trame à la suivante, par un dispositif opto-mécanique, ne conduisant toutefois qu'à un faible taux de recouvrement.

2) Barrette comprenant deux séries de détecteurs élémentaires alignés respectivement en deux colonnes, avec, dans chaque colonne, un décalage entre deux détecteurs voisins de la dimension d'un détecteur, les décalages des deux colonnes étant alternés. Une telle disposition géométrique implique aussi un entrelacement des trames de balayage pour obtenir un taux de recouvrement voisin de 2.

3) Barrette comprenant plus de deux séries, par exemple quatre, de détecteurs alignés respectivement en autant de colonnes, avec, dans chaque colonne, entre deux détecteurs voisins, le même décalage que dans la barrette du deuxième types, les décalages respectifs des colonnes étant eux-mêmes légèrement décalés les uns par rapport aux autres. Une telle géométrie présente déjà un taux de recouvrement voisin de 2 et ne nécessite donc pas d'entrelacement de trames.

4) Barrette comprenant deux mosaïques de détecteurs disposés en m lignes et n, par exemple quatre, colonnes, les lignes respectives des deux mosaïques étant alternées. Cette géométrie, similaire à celle du type 2, fournit une redondance, chaque élément d'image étant analysé successivement par n éléments détecteurs.

Dans les systèmes de veille, les détecteurs élémentaires des barrettes utilisées jusqu'à maintenant étaient au contraire suffisamment grands pour s'adapter aux taches optiques produites par les points chauds des objets (avions et autres cibles) à détecter et dont la température est très supérieure à celle du fond de scène.

Comme exemple de géométrie de barrette de veille, on a adopté deux colonnes de détecteurs espacées de la dimension d'une tache optique produite par une cible ponctuelle et les détecteurs des deux colonnes étant respectivement légèrement décalés pour obtenir un certain recouvrement d'une colonne à l'autre afin de ne pas produire de perte sur le signal et donc de rendre efficaces les algorithmes d'extraction de cibles.

Les barrettes de veille utilisées jusqu'à maintenant, avec des détecteurs a relativement grande surface sensible, présentent toutefois deux inconvénients majeurs.

Réalisées en petites séries, elles coûtent d'abord très cher. Ensuite, elles n'utilisent pas de redondance. Avec une redondance d'ordre n effectuée par un détecteur IR-CCD, on arrive vite, à cause de la taille des éléments et donc de la quantité de photons captés, à une saturation des capacités de stockage et des circuits de traitement. La technologie ne permet pas d'étendre à volonté la dynamique des circuits de traitement. Elle est forcément bornée, ce qui conduit inévitablement à un phénomène de saturation tout-à-fait préjudiciable en veille où l'on veut détecter des objets dont la température est très supérieure à celle du fond de scène. Par exemple, dans la plage des températures saturantes, deux points chauds de températures respectivement différentes ne peuvent plus être différenciés. Plus les surfaces sensibles des détecteurs sont grandes, plus le bruit spatial fixe est important, plus la dynamique devrait l'être aussi et, ne le pouvant pas, plus les circuits de traitement risquent d'être saturés.

La présente invention vise donc à pallier ces inconvénients.

A cet effet, la présente invention concerne un ensemble de détection pour système de veille infrarouge destiné à la détection d'objets chauds sur un fond de scène, comprenant une barrette de détecteurs infrarouge élémentaires d'analyse du fond de scène, ensemble de détection caractérisé par le fait que les détecteurs élémentaires sont des détecteurs d'imagerie de surfaces sensibles plus petites que les taches optiques produites par les objets chauds à détecter et il comporte des moyens agencés pour regrouper virtuellement les détecteurs d'imagerie en détecteurs virtuels de veille de surfaces sensibles adaptées auxdites taches optiques.

Les intérêts de l'invention sont multiples. On profite du bas prix de revient des détecteurs d'imagerie réalisés en grandes séries. On réduit les coûts de maintenance grâce à la standardisation ainsi permise du module de détection. Une grande partie des circuits électroniques de prétraitement et de traitement associés peut être utilisée aussi bien dans les systèmes d'imagerie que dans les systèmes de veille.

Au plan de la saturation, les inconvénients liés aux détecteurs de grandes surfaces sensibles sont éliminés. Le regroupement des détecteurs élémentaires permet d'obtenir des détecteurs de veille virtuels de n'importe quelle surface sensible, donc adaptée à n'importe quelle tache optique.

Dans la forme de réalisation préférée de l'ensemble de détection de l'invention, il est prévu des moyens de correction de géométrie pour, avant de les regrouper en détecteurs virtuels de veille, regrouper les détecteurs élémentaires d'imagerie en m détecteurs virtuels intermédiaires contigus et alignés suivant une colonne, de même surface sensible que les détecteurs d'imagerie.

De préférence toujours, les moyens de regroupement peuvent être des moyens de regroupement bidirectionnel, en gisement et en site. Ces moyens de regroupement peuvent comporter des moyens de sommation, dans la direction des sites, de p détecteurs intermédiaires contigus au pas de q, inférieur à p, détecteurs, avec, par conséquent, un recouvrement de (p-q) détecteurs intermédiaires d'un détecteur de veille au suivant.

Du fait du balayage mécanique, par pivotement de miroir, par exemple dans la direction des gisements, et du balayage électronique de lecture de la barrette des m détecteurs virtuels intermédiaires s'étendant dans la direction des sites, les détecteurs intermédiaires glissent les uns sur les autres, ou se recouvrent deux à deux, dans la direction des gisements. On obtient donc un décalage en gisement correspondant à des "échantillons" de détection intermédiaires. La raison de ce glissement est simple : entre l'instant de lecture du détecteur intermédiaire n° 1 et l'instant $\varepsilon$ après de lecture du détecteur n°m, la barrette s'est relativement légèrement déplacée dans la direction des gisements.

Alors, les moyens de regroupement de l'ensemble de l'invention peuvent avantageusement comporter des moyens de sommation en gisement analogues aux moyens de sommation en site, avec un recouvrement de (r-s) échantillons intermédiaires d'un détecteur, ou pixel, de veille au suivant.

Dans ce cas, le rapport entre le nombre de pixels de veille et le nombre de pixels d'imagerie est $\frac{1}{qs}$.

Cette sommation bidirectionnelle procure un gain notable :

- on évite les atténuations de signal des cibles ponctuelles situées à la limite spatiale entre deux lignes balayées par deux détecteurs contigus dans la direction perpendiculaire à celle du balayage; on augmente donc la probabilité de détection;

- on améliore le rapport $\frac{signal}{bruit}$ par l'adaptation de la géométrie aux dimensions des taches optiques;

- on diminue la cadence de traitement des signaux, dans le cas évoqué par qs, et on peut ainsi, compte-tenu des technologies dont on dispose, mettre en oeuvre des algorithmes d'extraction de cibles efficaces.

L'invention sera mieux comprise à l'aide de la description suivante de la génération des cellules de veille de l'invention, en référence aux dessins annexés, sur lesquels

- la figure 1 représente, schématiquement, la barrette des détecteurs de l'ensemble de détection de l'invention;
- la figure 2 représente la barrette de la figure 1, après un premier regroupement des détecteurs [Sommation TDI ] ;
- la figure 3 représente la barrette de la figure 2, après alignement des détecteurs;
- la figure 4 illustre le glissement temporel de la barrette de la figure 3 et la génération des échantillons;
- la figure 5 représente la barrette équivalente de l'ensemble de détection, après génération des cellules virtuelles de veille, et
- la figure 6 représente schématiquement le circuit spécifique intégré de génération des cellules de veille.

On ne décrira pas les différents composants de l'ensemble de l'invention déjà abordés dans le préambule de cette description et au demeurant connus de l'homme de métier. Celui-ci pourra d'ailleurs utilement se reporter à d'autres demandes de brevet français au nom de la demanderesse, comme par exemple les demandes FR-A-2 591 349, 2 591 350, 2 591 409.

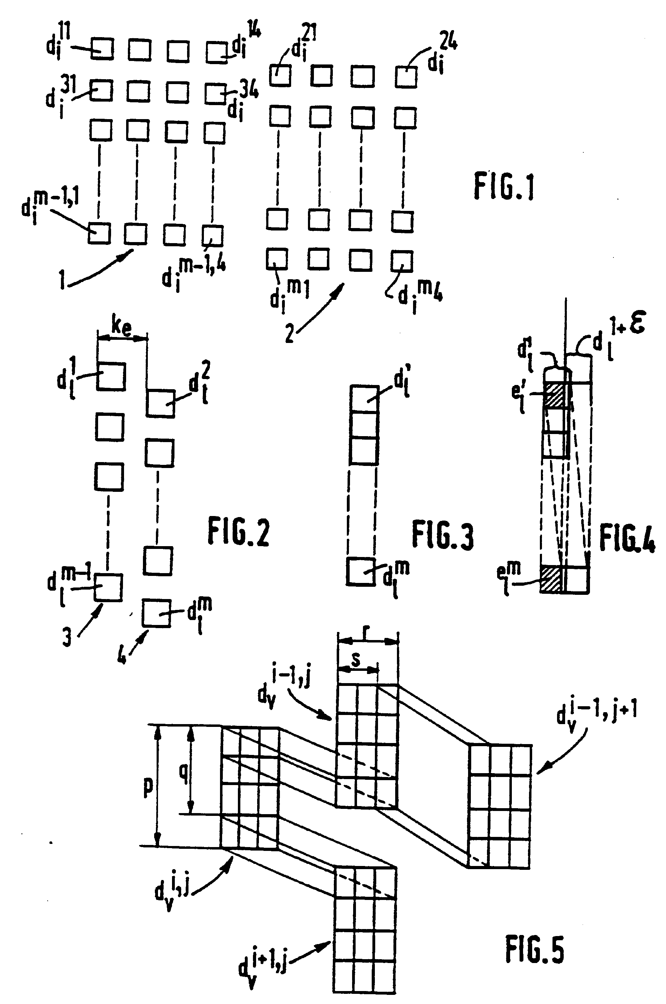

Considérons une barrette de détecteurs d'imagerie du quatrième type décrit dans le préambule ci-dessus, avec, ici, deux mosaïques 1, 2, décalées en gisement, de détecteurs $d_i$ disposés, dans chaque mosaïque, en $\frac{m}{2}$ lignes parallèles à la direction des gisements, de rangs impairs dans l'une 1, de rangs pairs dans l'autre 2, et en quatre colonnes parallèles à la direction des sites (figure 1). La mosaïque 1 comporte ainsi une première ligne de quatre détecteurs $d_i^{11}$ ... $d_i^{14}$, une deuxième ligne de détecteurs $d_i^{31}$ ... $d_i^{34}$ ... et une dernière lignes de détecteurs $d_i^{m-1,1}$ ... $d_i^{m-1,4}$ et la mosaïque 2, une première ligne de détecteurs $d_i^{21}$ ... $d_i^{24}$ ... et une dernière ligne de détecteurs $d_i^{m1}$ ... $d_i^{m4}$, les lignes des deux mosaïques étant alternées et sans recouvrement.

Un premier regroupement est effectué par sommation TDI pour regrouper les quatre détecteurs d'imagerie de chaque ligne de chaque mosaïque et obtenir deux colonnes 3, 4 de détecteurs virtuels intermédiaires $d_\ell^1$ ... $d_\ell^{m-1}$ et $d_\ell^2$ ... $d_\ell^m$, respectivement alternés d'une colonne à l'autre et sans recouvrement, les deux colonnes étant décalées temporellement en gisement de k échantillons e au sens décrit toujours des le préambule (figure 2).

Une deuxième correction de géométrie est effectuée pour regrouper les détecteurs des deux colonnes 3, 4 en une seule colonne 5 de m détecteurs $d_\ell^1$ ... $d_\ell^m$ alignés en site, contigus et de surface sensible sensiblement égale à celle des détecteurs d'imagerie $d_i$ (figure 3).

A partie des détecteurs intermédiaires $d_\ell$ de la colonne 5, ou mieux, des échantillons $e_\ell$, tels qu'hachurés sur la figure 4, on constitue les détecteurs virtuels de veille $d_v$. On notera qu'un échantillon $e_\ell$ a la même dimension en site qu'un détecteur intermédiaire $d_\ell$ et une dimension utile en gisement plus petite du fait d'un recouvrement dû au glissement en gisement de la barrette 5 pendant sa lecture en site. Les détecteurs $d_v$ sont constitués par sommation en site de p échantillons $e_\ell$ au pas de q et par sommation en gisement de r échantillons $e_\ell$ au pas de s. La barrette virtuelle 5, s'étendant dans la direction des sites, est déplacée - il s'agit naturellement d'un déplacement relatif - perpendiculairement à elle-même dans la direction des gisements. Aussi, en parlant de détecteurs de veille, on fait en réalité référence; dans la direction des gisements, aux éléments d'image ou pixels. Sur la figure 5, on a représenté, en vue éclatée, les détecteurs de veille $d_v^{i-1,j}$, $d_v^{ij}$, $d_v^{i+1,j}$ et $d_v^{i-1,j+1}$, i représentant le rang du détecteur de veille dans la direction des sites, j le rang du détecteur de veille dans la direction des gisements, avec p = 4, q = r = 3 et s = 2.

Les valeurs des paramètres p, q, r, s et k sont programmables et les détecteurs ou pixels de veille sont obtenus à l'aide d'un automate de calcul réalisé ici par un circuit spécifique ASIC intégré sur une carte standard.

Les cellules veille $d_v^{ij}$ ainsi obtenues sont adaptées en gisement à la tache optique et elles sont allongées en site, le recouvrement des cellules contiguës devant permettre de ne pas perdre en niveau de détection si une tache optique recouvre deux cellules.

On conçoit que l'automate doive, par programmation, disposer d'une grande souplesse pour être utilisable dans différentes configurations.

C'est ainsi que, par exemple en site, chaque cellule de veille $d_v^{ij}$ peut aussi recouvrir les deux cellules $d_v^{i-1,j}$ et $d_v^{i+1,j}$ auxquelles elle est contiguë.

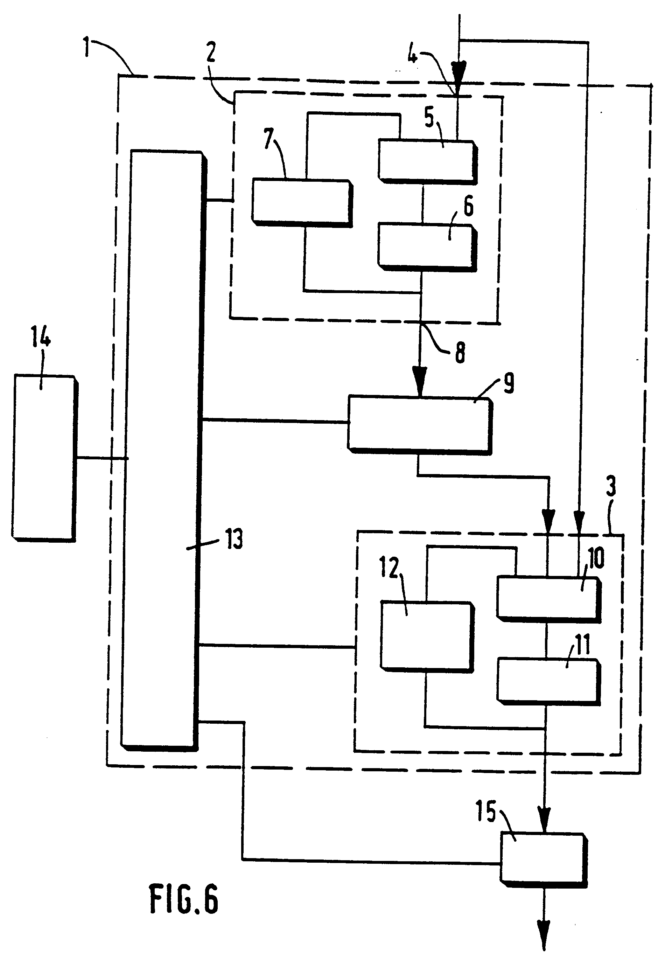

On a représenté sur la figure 6 une portion 1 du circuit spécifique intégré de génération des cellules ou pixels de veille à partir des pixels d'imagerie, qui comporte un bloc 2 de cellules paires et un bloc 3 d'ensemble des cellules.

Les pixels d'imagerie $d_i$ de rangs pairs, ceux de droite sur la figure 1, qui entrent en 4 dans le bloc 2, y sont regroupés en gisement, par un multiplexeur 5 suivi d'un additionneur 6, dont la sortie est reliée à l'une des entrées du multiplexeur 5 par une mémoire tampon 7. Les pixels sortant du bloc 2 en 8, ceux de droite sur la figure 2, entrent dans une mémoire 9 de rattrapage temporel dont la sortie est reliée à l'entrée du bloc 3 et, plus précisément à une entrée d'un multiplexeur 10 dont une autre entrée reçoit les pixels d'imagerie $d_i$ de rangs impairs, ceux de gauche sur la figure 1. La sortie du multiplexeur 10 du bloc 3 est reliée à l'entrée d'un additionneur 11, dont la sortie est reliée à une troisième entrée du multiplexeur 10 par une mémoire RAM 12 de formation de cellules de veille.

Les blocs 2 et 3 sont reliés à un séquenceur 13 contrôlé par une mémoire ROM 14 contenant les paramètres p, q, r, s, k.

A la sortie de la mémoire 9, les pixels d'imagerie de rangs pairs sont décalés en gisement de k échantillons, après rattrapage temporel des quatrièmes pixels d'imagerie de rangs impairs : c'est la deuxième correction de géométrie évoquée ci-dessus en référence à la figure 3.

Tous les échantillons d'imagerie sont additionnés en site et en gisement dans le bloc 3, la somme des échantillons transitant dans un bloc diviseur 15, comprenant en l'espèce une mémoire PROM, relié à la sortie du bloc 3 et contrôlé par le séquenceur 13, pour être divisée, en site et en gisement, et fournir les cellules de veille de la figure 5.

En réalité, compte-tenu de l'entrelacement des calculs, le circuit spécifique intégré comporte ici trois autres portions identiques à la portion 1 décrite ci-dessus, reliées en parallèle au diviseur 15.

**Revendications**

1. Ensemble de détection pour système de veille infrarouge destiné à la détection d'objets chauds sur un fond de scène, comprenant une barrette de détecteurs infrarouge élémentaires d'analyse du fond de scène, ensemble de détection caractérisé par le fait que les détecteurs élémentaires sont des détecteurs d'imagerie ($d_i$) de surfaces sensibles plus petites que les taches optiques produites par les objets chauds à détecter et il comporte des moyens (1, 15) agencés pour regrouper virtuellement les détecteurs d'imagerie en détecteurs virtuels de veille ($d_v$) de surfaces sensibles adaptées auxdites taches optiques.

2. Ensemble de détection selon la revendication 1, dans lequel il est prévu des moyens (2, 9) de correction de géométrie pour, avant de les regrouper en détecteurs virtuels de veille, regrouper les détecteurs élémentaires d'imagerie en m détecteurs virtuels intermédiaires ($d_\ell$) contigus et alignés suivant une colonne, de même surface sensible que les détecteurs d'imagerie.

3. Ensemble de détection selon l'une des revendications 1 et 2, dans lequel les moyens de regroupement (1, 15) sont des moyens de regroupement bidirectionnel en site et en gisement.

4. Ensemble de détection selon la revendication 2, dans lequel les moyens de regroupement comportent des moyens (11-15) de sommation en site de p détecteurs d'imagerie intermédiaires contigus ($d_\ell$) au pas de q détecteurs avec un recouvrement de (p-q) détecteurs intermédiaires d'un détecteur de veille au suivant.

5. Ensemble de détection selon l'une des revendications 2 et 4, dans lequel les moyens de regroupement comportent des moyens (11-15) de sommation en gisement de r échantillons d'imagerie ($e_\ell$) au pas de s échantillons avec un recouvrement de (r-s) échantillons d'un pixel de veille au suivant.

**Patentansprüche**

1. Detektoreinheit für ein Infrarotüberwachungssystem zur Erfassung von heißen Objekten auf einem Hintergrund mit einer Anordnung von Infrarot-Elementardetektoren zur Hintergrundanalyse, dadurch gekennzeichnet, daß die Elementardetektoren Abbildungsdetektoren ($d_i$) sind, deren empfindliche Oberfläche kleiner als die durch die zu erfassenden, heißen Objekte erzeugten optischen Punkte sind, wobei die Erfassungseinheit Mittel (1, 15) aufweist, die dafür eingerichtet sind, die Abbildungsdetektoren virtuell in virtuelle Überwachungsdetektoren ($d_v$) mit an die besagten optischen Punkte angepaßten, empfindlichen Oberflächen umzugruppieren.

2. Detektoreinheit nach Anspruch 1, gekennzeichnet durch Mittel (2, 9) zur Geometriekorrektur, um die elementaren Abbildungsdetektoren, bevor sie in virtuelle Überwachungsdetektoren umgruppiert werden, in m virtuelle, aneinandergrenzende und längs einer Spalte ausgerichtete Zwischendetektoren ($d_i$) umzugruppieren, die die gleiche empfindliche Oberfläche wie die Abbildungsdetektoren haben.

3. Detektoreinheit nach Anspruch 1 oder 2, dadurch gekennzeichnet, daß die Mittel zum Umgruppieren (1, 15) Mittel zum Umgruppieren in zwei Richtungen, in Bezug auf Erhebungswinkel und Peilwinkel, sind.

4. Detektoreinheit nach Anspruch 2, dadurch gekennzeichnet, daß die Mittel zum Umgruppieren Mittel (11 bis 15) zum Aufsummieren bei festem Peilwinkel von p aneinandergrenzenden Abbildungszwischendetektoren ($d_i$) mit einer Schrittweite von q Detektoren und einer Überdeckung von (p-q) Zwischendetektoren von einem Überwachungsdetektor zum nächsten aufweisen.

5. Detektoreinheit nach Anspruch 2 oder 4, dadurch gekennzeichnet, daß die Mittel zum Umordnen Mittel (11 bis 15) zum Aufsummieren bei festem Erhebungswinkel von r Abbildungsmustern ($e_i$) bei einer Schrittweite von s Mustern mit einer Überdeckung von (r-s) Mustern von einem Überwachungspixel zum nächsten aufweisen.

**Claims**

1. Detection unit for an infra-red guarding system intended for the detection of hot objects on a background, comprising a strip of basic infra-red detectors for analysing the background, which detection unit is characterised by the fact that the basic detectors are imagery detectors ($d_i$) having smaller sensitive surfaces than the optical spots produced by the hot objects to be detected and it comprises means (1, 15) arranged for regrouping virtually the imagery detectors as virtual guarding detectors ($d_v$) having sensitive surfaces adapted to said optical spots.

2. Detection unit according to Claim 1, in which geometry correction means (2, 9) are provided, in order, before regrouping them as virtual guarding detectors, to regroup the basic imagery detectors as m intermediate virtual detectors (d $\ell$) which are adjacent and aligned along a column, having the same sensitive surface as the imagery detectors.

3. Detection unit according to one of Claims 1 and 2, in which the regrouping means (1, 15) are bidirectional regrouping means as regards line of sight and as regards bearing.

4. Detection unit according to Claim 2, in which the regrouping means comprise means (11-15) for the addition of the line of sight of p adjacent intermediate imagery detectors (d $\ell$) in step with q detectors with an overlap of (p-q) intermediate detectors from one guarding detector to the next.

5. Detection unit according to one of Claims 2 and 4, in which the regrouping means comprise means (11-15) for the addition as regards bearing of r imagery samples (e$\ell$) in step with s samples with an overlap of (r-s). samples from one guarding pixel to the next.

$d_i^{11}$ $d_i^{14}$ $d_i^{21}$ $d_i^{24}$

**FIG.1**

$d_i^{31}$ $d_i^{34}$

$d_i^{m-1,1}$

$d_i^{m-1,4}$

1

$d_i^{m1}$ $d_i^{m4}$

2

$ke$

$d_l^1$ $d_l^2$

**FIG.2**

$d_l^{m-1}$

3

$d_l^m$

4

$d_l^1$

**FIG.3**

$d_l^m$

$d_l^n$ $d_l^{1+\varepsilon}$

$e_l'$

**FIG.4**

$e_l^m$

$r$

$s$

$d_v^{i-1,j}$

$d_v^{i-1,j+1}$

$p$

$q$

$d_v^{i,j}$

**FIG.5**

$d_v^{i+1,j}$

EP 0 398 801 B1

FIG.6

8